# EUROPÄISCHE PATENTSCHRIFT

(11) **EP 3 315 752 B1**
(45) Veröffentlichungstag und Bekanntmachung des Hinweises auf die Patenterteilung: **08.01.2020**
(21) Anmeldenummer: 16196348.3
(22) Anmeldetag: 28.10.2016
(51) Int. Cl.: F02F 11/00, F16J 15/12

(54) **ELASTISCHE DICHTUNG**
ELASTIC SEAL
JOINT D'ÉTANCHÉITÉ ÉLASTIQUE

(43) Veröffentlichungstag der Anmeldung: 02.05.2018
(73) Patentinhaber: Frenzelit GmbH, 95460 Bad Berneck (DE)
(72) Erfinder: Steinert, Theresa, 95195 Röslau (DE); Will, Andreas, 95686 Fichtelberg (DE); Moritz, Stephanie, 70176 Stuttgart (DE)
(74) Vertreter: Becker Kurig Straus

(56) Entgegenhaltungen:
- DE-A1- 2 216 994
- DE-A1- 2 448 963
- DE-A1- 10 010 586

## Beschreibung

### Gebiet Der Erfindung

Die vorliegende Erfindung betrifft eine relaxationsausgleichende Dichtung mit Federelement und insbesondere eine elastische Dichtung für eine Rohrinstallation. Die elastische Dichtung der vorliegenden Erfindung basiert dabei auf einem Federelement, das jeweils ein oder zwei Dichtelemente gegen entsprechende Dichtflächen eines abzudichtenden Dichtspalts drückt. Die elastische Dichtung der vorliegenden Erfindung eignet sich besonders zur Abdichtung von statischen Flanschverbindungen, ist also eine so genannte statische Dichtung. Weiterhin eignet sich die elastische Dichtung der vorliegenden Erfindung für die Abdichtung von Flanschverbindungen aus Verbundwerkstoffen, Keramik, Kunststoff, Glas oder Emaille-, Keramik-, oder Glas-beschichtete Flanschverbindungen und/oder Flanschverbindungen aus einem relaxierenden Material wie GFK (Glasfaserverstärkter Kunststoff) und anderen Komposit- bzw. Verbund- bzw. faserverstärkten Materialien. Die Erfindung betrifft ebenso ein System aus Dichtung und Flanschen.

### Stand der Technik

Momentan werden im Bereich von Flanschverbindungen, z.B. statische Flanschverbindungen aus relaxierendem GFK, häufig Polytetrafluorethylen-(PTFE)basierende Dichtungen eingesetzt. Der große Vorteil von PTFE liegt in der guten chemischen Beständigkeit dieses Kunststoffes. Entsprechend naheliegend ist der Einsatz in der chemischen Industrie und in Kombination mit Flanschen, z.B. statischen Flanschen aus GFK, Keramik, Kunststoff, etc. Klassische Dichtungsmaterialien, die über den Kalander-Prozess oder Papierprozess hergestellt werden, sind in erste Linie auf Grund der verhältnismäßig geringen chemischen Beständigkeit ihrer Grundmaterialien für solche Anwendungen nicht geeignet. Bei den hierbei kritischen Komponenten handelt es sich vor allem um natürliche und synthetische Fasern (z. B. Zellstofffasern, Aramidfasern) sowie natürlichen oder synthetischen Kautschuk.

Die Herstellung von PTFE Dichtungsringen erfolgt über das Pressen und Sintern von PTFE Granulat. Auf diese Weise können Platten produziert werden, aus denen entsprechende Geometrien herausgestanzt werden oder es können Rohre gepresst werden, aus denen Dichtungen in gewünschter Dicke durch Spanen herausgearbeitet werden.

Diese Dichtungen können aus reinem PTFE oder gefülltem PFTE bestehen. Unter gefülltem PTFE wird eine Verstärkung des Materials durch eingebettete Fasern (beispielsweise Glasfasern) und/oder Füllstoffe (beispielsweise Graphit, amorphe Kieselsäure) verstanden. Eine derartige Verstärkung ermöglicht die gezielte Modifizierung, vor allem von mechanischen Eigenschaften. Im Bereich der PTFE Dichtungen wird so die starke Fließneigung des Basismaterials verringert. Bei Produkten aus reinem PTFE kommt auch teilweise gerecktes PTFE (ePTFE) zum Einsatz. Durch eine Orientierung der PTFE Polymere wird ebenfalls eine Verringerung des starken Fließverhaltens erreicht und das Rückstellvermögen des Materials wird verbessert. Diese Fließeigenschaft von PTFE ist eine große Schwäche im Einsatzbereich als Dichtung und vor allem im Bereich stark relaxierender bzw. sich setzender GFK Flansche/Rohrleitungen. Jedoch finden solche PTFE-Dichtungen auch bei anderen statischen Flanschverbindungen Anwendung.

Eine gängige Vorgehensweise, um einem Verlust an Flächenpressung durch das Relaxationsverhalten der GFK-Flanschverbindung und dem Fließverhalten der PTFE basierenden Dichtung entgegenzuwirken, besteht in der Verwendung einer profilierten Dichtungsoberfläche. So wird die Verbindungsfläche Flansch-Dichtung verringert und die aufgebrachten Flächenpressungen durch die Verschraubung können erhöht werden ohne den Flansch direkt stärker zu belasten.

Die bisher verwendeten Dichtungsmaterialien lassen noch Probleme offen. Für die bekannten Probleme des geringen Rückstellvermögens und des starken Fließverhaltens des Dichtungsmaterials in Kombination mit dem Relaxationsverhalten der GFK Verbindung und der daraus resultierenden Undichtigkeit, bzw. dem hohen Instandhaltungsaufwand gibt es bisher keine zufriedenstellende Lösung auf dem Markt.

DE 24 48 963 A1 offenbart ein statisches Dichtelement zum Abdichten zweier paralleler Dichtflächen an Rohrleitungen oder Ventilen bei Tiefsttemperaturanwendungen. Die Dichtung umfasst einen federtellerähnlichen Metallkern mit einer darüber gezogenen Kunststoffmanschette, z.B. aus PTFE.

DE 22 16 994 A1 offenbart eine dynamsiche Dichtung zur Montage zwischen Maschinen- oder Behälterteilen. Die Dichtung umfasst eine Ringdichtung mit U-förmigen Querschnitt aus Kunststoff, z.B. PTFE, die über einer Tellerfeder angeordnet ist.

DE 100 10 586 A1 offenbart eine dynamische Dichtung, insbesondere einen Dichtring zur Abdichtung von Konstruktionselementen, Der Dichtring besteht im Wesentlichen aus zwei V-förmig miteinander verbundenen Schenkeln. Die Schenkel des Dichtringes können einen Dichtungsträger aus einem elastischen Metall oder Kunststoff aufweisen.

### Kurze Beschreibung der Erfindung

Gemäß einem ersten Aspekt der vorliegenden Erfindung wird eine Dichtung mit mindestens einem Federelement und mindestens einem Dichtelement bereitgestellt. Bei der Dichtung ist das Federelement dazu bestimmt und dazu eingerichtet das mindestens eine Dichtelement gegen mindestens eine Dichtfläche zu pressen. Hier sind insbesondere das Dichtmaterial und das Federelement, das einen definierten Anpressdruck erzeugt, als getrennte Bauteile ausgeführt, wobei zumindest das Federelement selbst keine Dichtwirkung zeigt sofern es ohne das Dichtmaterial verwendet wird.

In einer Ausführungsform ist die Dichtung für Flansche geeignet, die aus einem Material hergestellt sind, das ausgewählt ist aus der Gruppe, bestehend aus Keramik, Glas, Kunststoff, einem Keramik-, Glas- oder Emaille-beschichteten Werkstoff, und einem Verbundwerkstoff. Bevorzugte Kunststoffe für die Flansche können eines oder mehrere umfassen von hartem Polyvinylchlorid (PVC-Hart bzw. PVC-U), Polypropylen (PP), Polyethylen (PE) und Polyvinylidenfluorid (PVDF). In einer besonders bevorzugten Ausführungsfonn sind die Flansche aus Glasfaserverstärktem Kunststoff, GFK, gefertigt, umfassen also mindestens einen Abschnitt aus GFK.

In einer Ausführungsform ist die Dichtung für Flansche geeignet, die in einer statischen Flanschverbindung angeordnet sind. Statische Flanschverbindungen umfassen im Zusammenhang der vorliegenden Erfindung alle Flanschverbindungen, die zwei im Wesentlichen unbewegliche Rohrabschnitte o.Ä. verbinden (abgesehen von minimalen Vibrationen etc.).

Diese Dichtung ist insbesondere für statische Flanschverbindungen, bevorzugt aus Verbundmaterialien geeignet, z.B. solche, die unter Belastung oder im Betrieb ein Setz- oder Relaxationsverhalten zeigen. Das allgemeine Gebiet der statischen Dichtungen umfasst insbesondere Flachdichtung, aber auch Profildichtung, Muffendichtung, Walzdichtung, Dichtungsschelle, Einschleifdichtung und Pressverbindung. Die vorliegende Erfindung betrifft ganz besonders das klassische Einsatzgebiet von statischen Flachdichtungen im weitesten Sinne.

In einer beispielhaften Ausführung ist die Dichtung als Flanschdichtung für Flansche aus glasfaserverstärktem Kunststoff (GFK) ausgeführt. Glasfaserverstärkter Kunststoff ist besonders gegenüber aggressiven Medien beständig, neigt jedoch dazu unter Belastung zum relaxieren, woraus sich eine Verringerung der Verpressung einer Dichtung ergibt, was zu Undichtigkeiten und Leckagen führt. Durch das Federelement der vorliegenden Erfindung kann der Verlust der Verpressung durch das Federelement ausgeglichen werden, da die Federkraft sich bei geringen Längenänderungen der Feder nur gering ändert.

Die Dichtung gemäß der vorliegenden Erfindung kann ebenso bei Flanschverbindungen auf Basis von Keramik-, Kunststoff-, Emaille- oder Glasflanschen Anwendung finden. Derartige Rohrleitungssysteme werden eingesetzt bei extremen Beanspruchungen (hohe Temperaturen, extreme Medienbeständigkeit). Zwar treten hierbei keine Relaxationsvorgänge auf, jedoch können diese Systeme aufgrund der spröden Keramik nicht so stark belastet werden. Folglich muss die Dichtung bereits bei sehr niedrigen Schraubenkräften sehr dicht werden. Aufgrund der variabel einstellbaren Kontaktfläche der Dichtung gemäß der vorliegenden Erfindung, z.B. einer solchen Tellerfeder (durch Variation des Kantenradius oder Kombination mit Anpresselement), kann durch eine geringe Kontaktfläche der Dichtung bereits bei geringen Schraubenkräften eine hohe Dichtheit erzielt werden.

Gemäß einer beispielhaften Ausführungsform der vorliegenden Erfindung umfasst die Dichtung zwei Anpresselemente, die jeweils zwischen dem mindestens einen Federelement und dem mindestens einen Dichtelement angeordnet sind. Die Anpresselemente dienen dazu das Dichtelement gleichmäßig gegen die Dichtfläche zu pressen. Weitehrhin dienen die Anpresselemente dazu eine etwaige vorhandene Radialverschiebungen eines Verpressungspunkts bzw. einer Verpressungslinie durch eine Relaxation und einer Verformung des mindestens einen Federelements entgegenzuwirken. Ein weiterer Vorteil dieser Ausführung besteht darin, dass die Feder selbst nicht länger auf der gesamten Umfangslänge einen gleichbleibenden Anpressdruck in Form einer Dichtlinie erzeugen können muss, da das Anpresselement durch seine Form eine konstante Position einer Verpressungs- bzw. Dichtlinie sicherstellen kann. Diese Ausführung ist vor allem für Federelemente gedacht, die sich beim Zusammenpressen auch in Radialrichtung verformen, was zu einem Walken des Dichtelements führen würde. Diese Ausführung eignet sich jedoch insbesondere auch für die Verwendung mit mehreren einzelnen und vor allem nichtrotationssymmetrischen Federelementen.

Bei einer zusätzlichen Ausführung der Dichtung ist diese als Rohr- bzw. Flanschdichtung ausgeführt. Rohr- bzw. Flanschdichtungen sind im Wesentlichen Ringförmig. Bei Einsatz als Flanschdichtung ist das Federelement mechanische Feder oder als Biege- oder Torsionsfeder ausgeführt. Der Ausdruck Mechanische Feder soll hier vor allem dazu dienen Gummi- bzw. Elastomerfedern auszuschließen. Mechanische Federn sind im Rahmen dieser Anmeldung soll Federn bezeichnen die als Metallfedern ausgeführt sind oder Federn in der Form von Metallfedern die aus Kunststoff oder Faserverstärkten Kunststoff hergestellt sind.

Bei einer anderen Ausführungsform der Dichtung ist das Federelement als Tellerfeder ausgeführt. Tellerfedern können als Metallfedern oder als Feder aus einem Verbundmaterial wie GFK oder CFK oder einem andern faserverstärktem Kunststoff hergestellt sein. Tellerfedern weisen gegenüber anderen Arten von Federn den Vorteil auf, dass sie jeweils mit einem geschlossenen kontinuierlichen Rand hergestellt werden können, und sich somit ohne weiter Verpressungselemente eignen eine geschlossene Dichtlinie bereitzustellen.

Bei einer weiteren beispielhaften Ausführungsform der Dichtung ist dieses als Rohr- bzw. Flanschdichtung ausgeführt. Das Federelement umfasst dabei bevorzugt mindestens eine Tellerfeder. Flanschdichtungen bilden einen Großteil der Verbindungen bei Rohrinstallationen. Das Federelement kann dabei im Wesentlichen die Abmessungen herkömmlicher Dichtungen bzw. Weichstoffdichtungen aufweisen, die bei herkömmlichen Rohrinstallationen verwendet wurden, um ein Nachrüsten solcher Anlagen zu ermöglichen. Durch entsprechende Abmessungen kann eine gleichmäßige Verpressung sowohl an einem Innenrand als auch an einem Außenrand einer Tellerfeder erzielt werden. Es sei angemerkt, dass die vorliegende Erfindung mit unterschiedlichen mechanischen Federelementen umsetzbar ist. Jedoch hat sich die Tellerfeder in Experimenten als besonders geeignet herausgestellt.

Bei einer anderen beispielhaften Ausführungsform der Dichtung ist das Dichtelement als einstückiges Dichtelement ausgeführt. In dieser Ausführung erstreckt sich das Dichtelement zumindest teilweise um das Federelement herum und ist im Querschnitt zumindest U-förmig. In dieser Ausführung kann das Federelement an einem Außenbereich angeordnet sein, wodurch das Federelement nicht mit dem abzudichtenden Medium (in der Regel im Inneren der abzudichtenden Rohrleitung) in Kontakt steht sondern durch die Dichtung von dem abzudichtenden Medium getrennt wird. Das einstückige Dichtungselement kann auch an einem Innenbereich angeordnet sein und mit einem abzudichtenden Medium in Kontakt stehen, wodurch erreicht werden kann, dass das Federelement nicht mit dem abzudichtenden Medium in Kontakt treten kann, und daher ein Material umfassen kann, das chemisch nicht beständig gegenüber dem abzudichtenden Medium ist. Bei dieser Ausführung ist das Dichtelement topologisch gesehen vom Geschlecht 1 und damit topologisch ringförmig mit einem Durchgang, wobei in dieser Ausführung die Dichtung bevorzugt nur ein einziges Dichtelement umfasst.

Bei einer weiteren beispielhaften Ausführungsform der vorliegenden Erfindung umfasst die Tellerfeder mindestens ein Metall. Die Tellerfeder ist bevorzugt aus Federstahl, kann jedoch ebenfalls aus Edelstahl oder einem anderen geeigneten Metall oder einer metallischen Legierung gefertigt sein. Es sollte ebenfalls darauf hingewiesen werden, dass die Tellerfeder bei Ausführungen, bei denen die Tellerfeder mit dem Medium in Kontakt steht, auch vernickelt, vergoldet oder mit einer anderen Schutzschicht überzogen sein kann. Es ist ebenfalls möglich die Tellerfeder zu lackieren oder zu emaillieren, um sie gegen Umwelteinflüsse bzw. das abzudichtende Medium zu schützen.

Bei einer anderen Ausführungsform der Dichtung umfasst die Tellerfeder einen Kunststoff- und/oder Verbundwerkstoff. Die Tellerfeder selbst muss keine Dichteigenschaften aufweisen, sondern lediglich das Setzverhalten bzw. das Kriech-/ Fließverhalten des Materials der Dichtung bzw. der Flansche ausgleichen. Die Tellerfeder oder das Federelement kann daher ebenfalls aus Kunststoff oder einem Verbundmaterial hergestellt sein. Als Verbundmaterial bietet sich hier Glasfaser-, und/oder Aramidfaser- und/oder Kohlefaser-verstärkter Kunststoff an. Kunststoff und Verbundmaterialien ermöglichen einen Einsatz auch bei ungünstigen Bedingungen, ohne dass mit Korrosion zu rechnen ist. Kunststoff und Verbundmaterialien ermöglichen ebenfalls eine relativ einfache Fertigung, da kein Metall heiß oder kalt umgeformt werden muss.

Eine zusätzliche Ausführungsform der Dichtung weist ein Dichtelement auf, das direkt mit der Tellerfeder verbunden ist bzw. direkt auf eine bevorzugt lackierte Tellerfeder aufgebracht ist. Bei dieser Ausführung ist das Dichtelement auf dem Federteller oder auf dem Anpresselement aufgebracht oder mit diesem verbunden. Diese Ausführung gestattet eine kompaktere Bauweise der Dichtung und eine einfachere Handhabung beim Einbau. Es ist beispielsweise möglich die Tellerfeder direkt in ein Fluorpolymer, z.B. Fluorkarbon-Kautschuk (FKM), Fluorkautschuk (FPM) und/oder PTFE, einzugießen bzw. einzusintern.

Bei einer zusätzlichen Ausführungsform der vorliegenden Dichtung umfasst das Dichtelement ein Elastomer, einen Lack, einen Dichtungsweichstoff, Fasern, Kohlenstoff, ein Fluorpolymer und/oder PTFE und/oder gerecktes PTFE. Derzeit wird ein Fluorpolymer und insbesondere PTFE aufgrund seiner inerten Eigenschaften bevorzugt. Je nach abzudichtendem Medium kann das Federelement jedoch auch mit einem Dichtungsweichstoff mit einem Elastomer und/oder einem Fasermaterial wie Papier oder Kohlenstoff- oder Glasfasern kombiniert werden, um eine überlegene Dichtwirkung zu erhalten. Wenn im Folgenden von PTFE die Rede ist, sollte verstanden werden, dass dieses auch durch andere Fluorpolymere oder Polymere allgemein ersetzt werden kann ohne vom Wesen der vorliegenden Erfindung abzuweichen.

In einer anderen Ausführungsform der Dichtung bildet die Form des Dichtelements zumindest zum Teil einen Teil einer Torusoberfläche. Damit umfasst die Dichtung einen Halbkreis-förmigen oder U-förmigen Querschnitt der radial nach außen oder radial nach innen geöffnet ist. In dem Innenbereich des U- oder halbkreisförmigen Querschnitts sind dann das mindestens eine Federelement und bevorzugt ebenfalls das oder die Anpresselemente angeordnet. Der Federteller und das Dichtelement können getrennt hergestellt werden und vor einem Einbau in einen Dichtspalt zusammengefügt werden. Der Federteller kann ebenfalls mit dem Dichtmaterial ummantelt werden. Es ist ebenfalls vorgesehen das Federelement und das Dichtelement beispielsweise durch Verkleben miteinander zu verbinden.

Bei einer weiteren Ausführungsform der Dichtung umfasst das mindestens eine Federelement mindestens zwei Tellerfedern. Die Tellerfedern sind dabei bevorzugt so miteinander verbunden, dass sie hintereinandergeschaltet bzw. in Reihe geschaltet sind. Die Tellerfedern können jedoch ebenfalls so miteinander verbunden werden, dass sie parallel geschaltet sind. Tellerfedern werden hintereinander oder in Reihe geschaltet, in dem sie gegensinnig aufeinander gestapelt werden, wobei sie sich nur im Bereich eines Innen- bzw. Außenrandes berühren. Tellerfedern können parallel geschaltet werden, indem sie einfach ineinander gestapelt werden, wobei die konische Außenfläche der einen Tellerfeder mit der konischen Innenfläche der anderen Tellerfeder in Kontakt steht. Je nach Ausführung kann so eine größerer Anpressdruck oder ein längerer und gleichmäßigerer Anpressdruck auch bei größerer Relaxation eines Flanschmaterials erreicht werden. Es sind natürlich ebenfalls Kombinationen von Reihen- und Parallelschaltungen möglich.

Bei einer zusätzlichen beispielhaften Ausführungsform der Dichtung umfasst das Federelement mindestens zwei Tellerfedern, die an mindestens einem Rand miteinander verbunden sind. Es ist ebenfalls möglich mehrere Tellerfedern miteinander zu verbinden. Weiterhin können mehrere Tellerfedern sowohl in Reihe und/oder parallel miteinander verbunden werden.

Bei einer anderen Ausführungsform des vorliegenden der Dichtung, das mindestens zwei Tellerfedern umfasst, sind diese jeweils an mindestens einem Rand miteinander verschweißt, vernietet oder miteinander verpresst. Autogenschweißen, Elektroschweißen, Laserschweißen oder auch Reibschweißen bieten sich dazu an jeweils zwei Tellerfedern stoffschlüssig miteinander zu verbinden. Bei Tellerfedern aus einem Verbundmaterial können diese ebenfalls miteinander verklebt werden, wobei die Klebestelle ebenfalls mit einem Fasermaterial verstärkt sein kann.

Ein Vernieten von Tellerfedern ist hingegen etwas komplizierter und kann auf einem Hohlniet basieren, der jeweils zwei Tellerfedern jeweils an einem Innen- oder Außenrand umgreift. Es ist ebenfalls möglich Tellerfedern so auszuformen, dass sie miteinander verpresst werden können, sodass ein fester Verbund aus mindestens zwei Tellerfedern entsteht, der durch Form- und/oder Reibschluss miteinander verbunden sind. Durch die verschiedenen Verbindungstechniken kann die Dichtung einfacher gehandhabt und eingebaut werden.

Eine weitere Ausführung der Dichtung umfasst mindestens zwei Tellerfedern, die jeweils an mindestens einem Rand miteinander verbunden sind, wobei die Tellerfedern jeweils am Rand eine Verzahnung aufweisen, und wobei die Verzahnungen ineinandergreifen. Durch die Verzahnung kann erreicht werden, dass die Tellerfedern in Radialrichtung nichtmehr gegeneinander verschoben werden können. Weiterhin gestattet es eine Verzahnung, dass die Tellerfedern durch ein Verpressen oder Verformen der Verzahnungen fest miteinander verbunden werden. Durch die Verzahnung kann auf ein aufwändiges und zeitraubendes Schweißen der Tellerfedern verzichtet werden, und die Tellerfedern können durch einen schnellen Ausstanz- und Pressvorgang miteinander verbunden werden. Eine Verzahnung an einer Innenkante der Tellerfedern ist aus mechanischer Sicht unproblematisch, da die Tellerfedern insbesondere an einem Innenrand auf Druck belastet werden, weswegen keine Probleme aufgrund von Kerbwirkung oder Rissbildung zu erwarten ist.

Bei einer zusätzlichen Ausführungsform der vorliegenden Dichtung umfasst diese weiter mindestens ein rohrförmiges Stützelement, das durch die Tellerfedern oder um die Tellerfedern herum verläuft. Das Stützelement sollte insbesondere das Dichtelement in Radialrichtung abstützen, sodass durch das Dichtelement keine Radial- oder Axialkräfte auf die Federelemente übertragen werden. Das Stützelement soll dabei das Dichtelement in Radialrichtung abstützen, sodass diese Aufgabe nicht von den Tellerfedern übernommen werden muss, da sonst eine Veränderung des Drucks des Mediums ebenfalls eine Veränderung des Anpressdrucks des Federelements auf das Dichtelement zur Folge hätte. Ein Stützelement gestattet es insbesondere im Bereich der Dichtung größere Durchmesserveränderungen zu vermeiden. Durch das Stützelement können Hohlräume vermieden werden, in denen sich Ablagerungen bilden können.

Eine weitere Ausführungsform der vorliegenden Dichtung zeichnet sich dadurch aus, dass es ein Dichtelement, Dichtwülste, Dichtrippen bzw. Dichtlippen oder eine andere Dichtstruktur aufweist. Die Dichtstruktur ist dabei bevorzugt kleiner als ein Anpressbereich, der durch das Anpresselement oder das Federelement erzeugt wird. Die Dichtstruktur kann mehrere konzentrische Rippen oder mehrere sich kreuzende Stege umfassen.

Eine zusätzliche beispielhafte Ausführungsform der vorliegenden Dichtung umfasst ein Federelement, das als Tellerfeder ausgeführt ist und das an einem Außenrand einen kleineren Verrundungsradius als an einem Innenrand aufweist. Durch die verschiedenen Verrundungsradien soll sowohl am Innenrand als auch am Außenrand eine gleichmäßige Flächenpressung mit einem im Wesentlichen gleichen Flächenpressungswert erreicht werden. Bei einer Tellerfeder weist eine bzw. die innere Kontakt- bzw. Dichtlinie eine größere Länge auf als eine bzw. die äußere Kontakt- bzw. Dichtlinie. Dies würde bei gleichen Verrundungsradien zu unterschiedlichen Flächenpressungen des jeweiligen Dichtelements führen, die dem Verhältnis der Durchmesser der Dichtlinien entspricht. Durch unterschiedlich große Verrundungsradien kann die Breite der Dichtlinie bzw. Kontaktlinie des Dichtelements und der Feder bzw. der Dichtfläche verändert werden. Idealerweise ist eine innere Dichtlinie breiter ausgeführt als eine äußere Dichtlinie. Bei einer idealen Dichtung ist das Produkt der Breite und der Länge (bzw. des Umfangs) der jeweiligen Dichtlinien gleich, d.h. die Flächenpressung der inneren und der äußeren Dichtlinie sind jeweils gleich. Bei einer idealen Ausführung weisen die innere und die äußere Dichtlinie eine gleiche Flächenausdehnung auf, und durch die im Wesentlichen gleichen Andruckkräfte des Federelements wird so eine gleiche Flächenpressung erreicht.

Es kann ebenfalls vorgesehen sein, dass sich die Breiten der Dichtlinien nicht signifikant unterscheiden, jedoch ein verstrecktes bzw. gerecktes PTFE-Material für die innere, kürzere Dichtlinie und ein unverstrecktes bzw. ungerecktes PTFE-Material für die äußere, längere Dichtlinie verwendet wird. Durch unterschiedliche Dichtungsmaterialien können ebenfalls die unterschiedlichen Flächenpressungen ausgeglichen werden.

In einer bevorzugten Ausführungsform der vorliegenden Erfindung wird ein Dichtungssystem bereitgestellt, das umfasst mindestens eine Dichtung gemäß der obigen Beschreibung und mindestens eine statische Flanschverbindung, wobei die mindestens eine Dichtung zwischen gegenüberliegenden Flanschflanken der mindestens einen statischen Flanschverbindung angeordnet ist und wobei ein Material der Flansche der mindestens einen statischen Flanschverbindung ausgewählt ist aus der Gruppe, bestehend aus Keramik, Glas, Kunststoff, einem Keramik-, Glas- oder Emaille-beschichteten Werkstoff, und einem Verbundwerkstoff, besonders bevorzugt aus Glasfaserverstärktem Kunststoff. Bevorzugte Kunststoffe für die Flansche können eines oder mehrere umfassen von hartem Polyvinylchlorid (PVC-Hart bzw. PVC-U), Polypropylen (PP), Polyethylen (PE) und Polyvinylidenfluorid (PVDF). In einer besonders bevorzugten Ausführungsform sind die Flansche aus Glasfaserverstärktem Kunststoff, GFK, gefertigt, umfassen also mindestens einen Abschnitt aus GFK.

### Kurze Beschreibung der Zeichnungen

Im Folgenden wird die vorliegende Erfindung anhand von Figuren beschrieben, die schematisch verschiedene beispielhafte Ausführungen einer erfindungsgemäßen Dichtung zeigen. Die in den Figuren dargestellten Ausführungen sind nicht maßstabgerecht dargestellt, wobei zum Teil Abmessungen gewählt wurden, die das Prinzip der vorliegenden Erfindung klarer zur Geltung bringen.
Figur 1A und 1B zeigen eine Tellerfeder, wie sie für die Dichtung der vorliegenden Erfindung verwendet werden kann.
Figuren 2 und 3 stellen Schnittansichten von erfindungsgemäßen Dichtungen mit einer Tellerfeder gemäß Figuren 1A und 1B dar.
Figuren 4A und 4B zeigen eine weitere Ausführungsform einer erfindungsgemäßen Dichtung mit einer Tellerfeder gemäß Figuren 1A und 1B.
Figuren 5A bis 5C stellen eine zusätzliche Ausführungsform einer erfindungsgemäßen Dichtung mit einer Tellerfeder gemäß Figuren 1A und 1B dar, bei der die Dichtelemente als Dichtraupen auf der Tellerfeder aufgetragen sind.
Figuren 6A bis 6C stellen eine andere Ausführungsform einer erfindungsgemäßen Dichtung mit einer Tellerfeder gemäß Figuren 1A und 1B dar, bei der die Tellerfeder im Wesentlichen vollständig mit einem Dichtelement überzogen ist.
Figuren 7A bis 7C stellen eine zusätzliche Ausführungsform einer Tellerfeder bzw. zweier Tellerfedern dar, die miteinander verbunden werden können.
Figur 8 zeigt eine Schnittansicht einer Dichtung mit zwei in Reihe geschalteten Tellerfedern, die durch einen zentralen Hohlniet miteinander verbunden sind.
Figuren 9A und 9B stellen eine Ausführung der erfindungsgemäßen Dichtung dar, das mit Schraubenfedern und zusätzlich mit Anpresselementen versehen ist.
Figuren 10A und 10B zeigen eine weitere Ausführungsform, der erfindungsgemäßen Dichtung, das mit Schraubenfedern, Anpresselementen und zusätzlich mit einem rohrförmigen Stützelement versehen ist.
Figuren 11A bis 11C stellen eine zusätzliche Ausführungsform, der erfindungsgemäßen Dichtung, das zwei in Reihe geschaltete Tellerfedern aufweist, dar.
Figuren 12A bis 12D zeigt weitere Ausführungsformen, einer anderen erfindungsgemäßen Dichtung, das mit zwei in Reihe geschalteten Tellerfedern versehen ist.
Figuren 13A bis 13C zeigt eine weitere Tellerfeder, die in der erfindungsgemäßen Dichtung verwendet werden kann.
Figur 14 zeigt einen Querschnitt durch eine Ausführungsform, einer Dichtung mit zwei parallel geschalteten Tellerfedern.

### Ausführliche Beschreibung der Ausführungsformen

Sowohl in der Beschreibung als auch in den Figuren werden gleiche oder ähnliche Bezugszeichen verwendet, um auf gleiche oder ähnliche Elemente oder Komponenten Bezug zu nehmen. Um die Beschreibung knapp zu halten werden Elemente die bereits in anderen Figuren erwähnt wurden nicht unbedingt in der Beschreibung zu jeder weiteren Figur nochmals explizit erwähnt, zumal eine Bezugszeichenliste beigefügt ist.

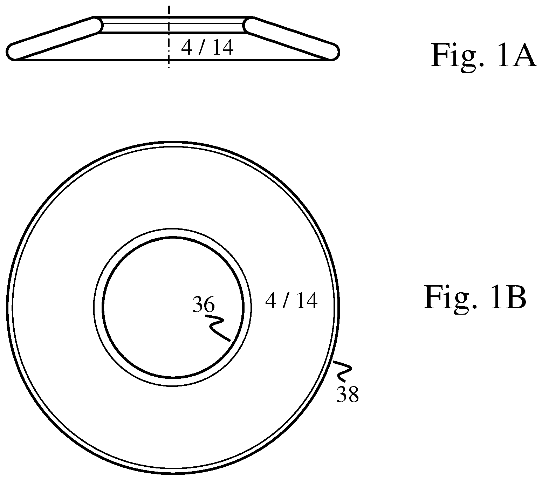

Figur 1A zeigt einen Querschnitt durch ein als Tellerfeder 14 ausgeführtes Federelement 4, das in einer Dichtung gemäß der vorliegenden Erfindung eingesetzt werden kann. Die Tellerfeder weist im Wesentlichen die Form eines Kegelstumpfmantels auf und wird in Axialrichtung der Drehsymmetrieachse belastet. Bei Belastung in Axialrichtung wird die Tellerfeder flacher gedrückt, wobei sich der Außendurchmesser leicht vergrößert und der Innendurchmesser sich leicht verkleinert. Durch diese Verformung kann es vorkommen, dass sich die Dichtung bzw. die Dichtlinie bei dieser Art der Dichtung bei Relaxation des Flanschmaterials leicht bewegt. Diese Bewegung kann die Dichtheit der Dichtung beeinflussen. Der Innenrand und der Außenrand der Tellerfeder bilden dabei die Grundlage für die Dichtlinien, mit denen das jeweilige Dichtelement verpresst wird.

Figur 1B stellt eine Aufsicht bzw. eine Ansicht aus einer Axialrichtung auf die Tellerfeder dar. Das Federelement 4 ist als Tellerfeder 4 ausgeführt wobei der Innenrand mit dem Bezugszeichen 36 und der Außenrand mit dem Bezugszeichen 38 versehen ist. Die Tellerfeder der Figuren 1A und 1B sollen erfindungsgemäß mit mindestens einem nicht dargestellten Dichtelement eingesetzt werden.

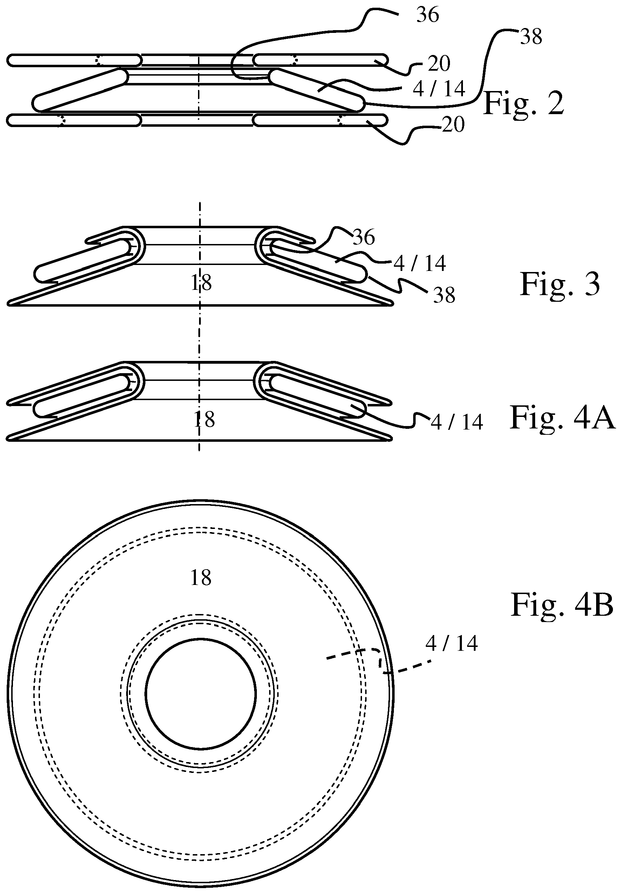

Figur 2 stellt eine Schnittansicht einer erfindungsgemäßen Dichtung mit der Tellerfeder 14 von Figur 1 dar. In Figur 2 umfasst die Dichtung 2 zwei Dichtelemente 6, die als zwei Weichstoffdichtungen 20 ausgeführt sind. Es ist ebenfalls möglich, Kohlenstoff- oder auch PTFE-Dichtungen zu verwenden. Es kann ebenfalls vorgesehen sein für die Dichtung die an dem Innenrand 36 abdichtet ein verstrecktes PTFE-Material zu verwenden und bei der Dichtung die am Außenrand 38 abdichtet, unverstrecktes PTFE-Material zu verwenden. Es ist möglich zwei identische Dichtelemente bzw. Weichstoffdichtungen 20 zu verwenden. Es ist jedoch ebenfalls möglich zwei Dichtelemente bzw. Weichstoffdichtungen 20 zu verwenden die unterschiedliche Abmessungen aufweisen, wobei es vorteilhaft ist, wenn ein Außendurchmesser der oberen kleineren Dichtung kleiner ist als ein Innendurchmesser der unteren größeren Dichtung, da dann beide Dichtelemente aus einem einzigen Stück Weichdichtungsmaterial hergestellt werden können. Es kann zudem vorgesehen sein die beiden Dichtungen mit der Tellerfeder zu verkleben, um die Handhabung der Dichtung zu vereinfachen. Bei der Dichtung von Figur 2 steht die Tellerfeder 14 bzw. das Federelement 4 mit dem abzudichtenden Medium in Kontakt. Die Tellerfeder der Ausführung von Figur 2 sollte daher zumindest gegenüber dem abzudichtenden Medium beständig sein. Weiterhin weist die Ausführung von Figur 2 insgesamt vier Dichtstellen bzw. Linien auf, jeweils zwei zwischen der Dichtung und den Dichtflächen der abzudichtenden Vorrichtung und den Dichtelementen und jeweils zwei zwischen den Dichtelementen und dem Federelement 4 bzw. der Tellerfeder 14.

Figur 3 stellt eine Schnittansicht einer anderen Ausführungsform einer erfindungsgemäßen Dichtung mit einer Tellerfeder gemäß Figuren 1A und 1B dar. Bei der Dichtung gemäß Figur 3 wird ein einstückiges Dichtelement 18 eingesetzt. Das Dichtelement 18 ist dabei formschlüssig mit dem als Tellerfeder 14 ausgeführten Federelement 4 verbunden. Das Dichtelement überdeckt den Innenrand 36 der Tellerfeder 14, wodurch die Tellerfeder 14 nicht mehr direkt mit dem abzudichtenden Medium in Kontakt tritt. In der Version der Figur 3 kann als Dichtelement aus einem Faser- oder Kohlenstoff 24 verwendet werden. Es ist jedoch ebenfalls möglich ein Dichtelement aus Fluorpolymer, z.B. PTFE einzusetzen.

In den Figuren 4A und 4B sind jeweils eine Schnittansicht und eine Aufsicht auf eine Dichtung dargestellt, bei dem das Dichtelement im Wesentlichen symmetrisch ist, und an beiden Seiten der Tellerfeder 14 einen gleichen Durchmesser aufweist. Diese Ausführung kann beispielsweise durch eine Tellerfeder aus Federstahl und ein Dichtelement aus PTFE hergestellt werden, das aus einem PTFE-Block durch Drehen spanend herausgearbeitet wurde.

Hier bildet das Dichtelement einen im Wesentlichen U-förmigen Querschnitt, der in Radialrichtung die gesamte Tellerfeder überdeckt. Bei der dargestellten Form kann das Dichtelement nicht oder nur unter Zerstörung zwischen dem Federelement und einer Dichtfläche ausgeblasen bzw. durch das Medium herausgedrückt werden. Bei der dargestellten Ausführung ist es unmöglich das Dichtelement falschherum an dem Federelement zu befestigen.

In der Aufsicht in der Axialrichtung ist nur das Dichtelement 18 zu erkennen, das als Tellerfeder 14 ausgeführte Federelement 4 ist lediglich gestrichelt dargestellt.

Die Dichtung der Figuren 4A und 4B kann als Dichtung mit einer Tellerfeder und einem PTFE-Dichtelement beschrieben werden. Die Tellerfeder der Figuren 4A und 4B weist die Form eines Kegelstumpfmantels auf. Das Dichtelement ist einstückig ausgeführt und umgibt einen Innenrand der Tellerfeder, und erstreckt sich von dort aus jeweils bis zu einem Außenrand der Tellerfeder. Das Dichtelement und die Tellerfeder sind rotationssymmetrisch. Das Dichtelement ist in einem Querschnitt entlang einer Rotationssymmetrieachse u-förmig, wobei die beiden Schenkel der U-Form die Tellerfeder umgeben. Das Dichtelement umgibt die Tellerfeder so an ihren beiden in Axialrichtung weisenden Seiten und entlang eines Innenrandes. Die Tellerfeder kann aus Metall gefertigt sein und das Dichtelement kann aus Fluorpolymer z.B. PTFE hergestellt sein, bzw. Fluorpolymere z.B. PTFE umfassen.

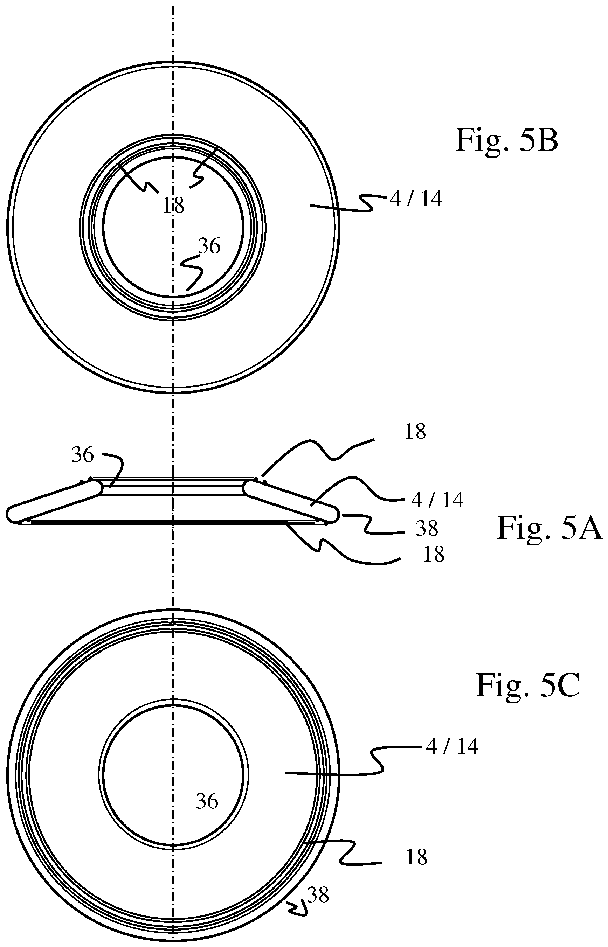

Figuren 5A bis 5C stellen eine zusätzliche Ausführungsform einer erfindungsgemäßen Dichtung mit einer Tellerfeder gemäß Figuren 1A und 1B dar, bei der die Dichtelemente als Dichtraupen direkt auf der Tellerfeder aufgetragen sind.

Hier sind die Dichtelemente 18 direkt mit der Tellerfeder verbunden, indem sie direkt auf die Tellerfeder als Dichtlippen oder Dichtraupen 22 aufgebracht bzw. anvulkanisiert wurden.

Wenn die Dichtung eingebaut ist, stehen die Dichtlippen mit den jeweiligen Dichtflächen in Kontakt. Das Material des Dichtelements sollte hier eine höhere Festigkeit aufweisen als im Falle der Figuren 2 bis 4. Die Ausführung der Dichtung von Figur 5 weist den Vorteil auf, dass die einstückige Bauweise eine sehr einfache Handhabung und einen sehr einfachen Einbau ermöglicht. Weiterhin kann diese Ausführung besonders mit Edelstahlfedern oder lackierten Federstahlfedern verwendet werden.

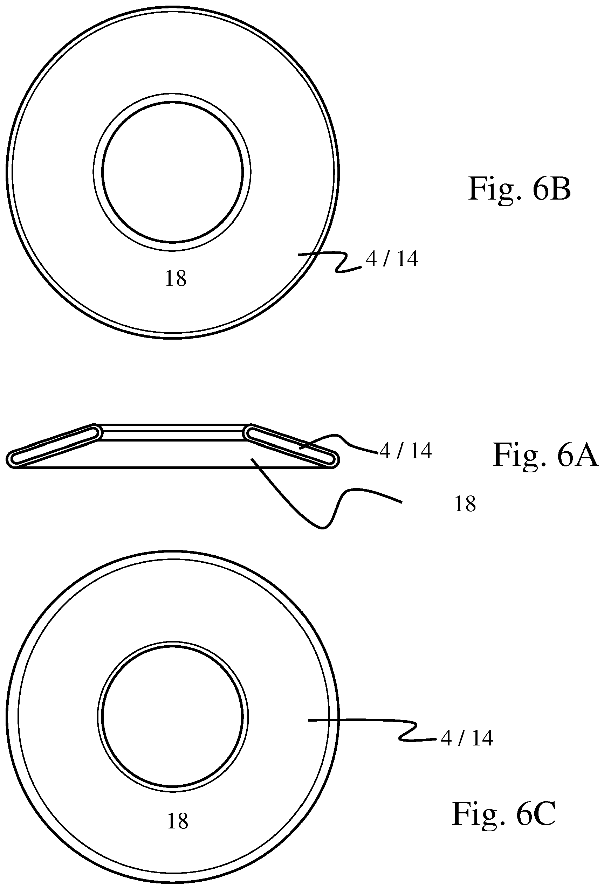

Figuren 6A bis 6C stellen eine andere Ausführungsform einer erfindungsgemäßen Dichtung dar, bei dem das als Tellerfeder 14 ausgeführte Federelement 4 im Wesentlichen vollständig mit einem Dichtelement überzogen ist, das direkt mit der Tellerfeder verbunden ist. Das Dichtelement kann einstückig aus PTFE oder gefülltem PTFE hergestellt sein. Die Tellerfeder 14 kann durch Spritzgießen mit dem Material des Dichtelements überzogen werden, bzw. durch das Material des Dichtelements umspritzt werden.

Auch diese Ausführung lässt sich einfach handhaben und einbauen, da es nicht möglich ist bei einem Einbau einen Teil des Dichtelements zu falten oder unrichtig einzubauen.

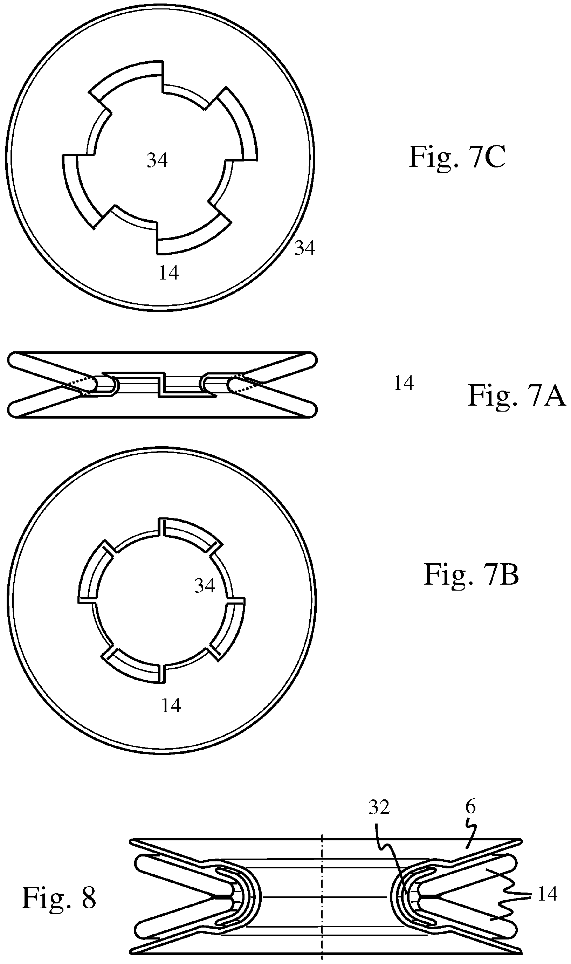

Figuren 7A bis 7C stellen eine zusätzliche Ausführungsform einer Tellerfeder bzw. zweiter Tellerfedern dar, die miteinander verbunden werden können. Die Schnittansicht 7A zeigt zwei innenverzahnte Tellerfedern die miteinander verbunden sind. Durch die Verzahnung an Innenrand 34 können sich die Tellerfedern 14 nichtmehr in Radialrichtung gegeneinander verschieben. Weiterhin kann durch die Verzahnung sichergestellt werden, dass die zwei Tellerfedern koaxial ausgerichtet sind. Je nach Ausführung der Verzahnung können die beiden Tellerfedern auch durch Verpressen miteinander verbunden werden. Eine Innenverzahnung kann dabei durch Formschluss und/oder Reibschluss eine feste Verbindung zwischen den Tellerfedern herstellen. Zur Übersichtlichkeit wurde darauf verzichtet ein Dichtelement darzustellen. Es kann jedoch ohne weiteres ein Dichtelement verwendet werden, wie es in Figur 4 dargestellt ist.

Figur 7B zeigt eine Ansicht aus einer Axialrichtung auf die beiden Tellerfedern von Figur 7A.

Figur 7C zeigt eine Ansicht auf eine einzelne Tellerfeder und eine mögliche Gestaltung der Verzahnung 34 des Innenrandes 36 an der Stelle, an der sich zwei gleichartige Tellerfedern berühren können.

In Figur 8 ist ein Querschnitt durch eine Dichtung dargestellt, bei dem zwei Tellerfedern 14 durch ein Hohlniet 32 miteinander verbunden sind. Zusätzlich ist noch ein Dichtelement 6 dargestellt, wie es auch bei den Tellerfedern der Figur 7 verwendet werden kann. Das Dichtelement deckt dabei sowohl den Niet 32 als auch die Tellerfedern 14 ab.

Der Hohlniet 32 umgreift die zwei Tellerfedern an einem Innenrand. Durch die Vernietung kann durch Formschluss ein fester Verbund erzeugt werden.

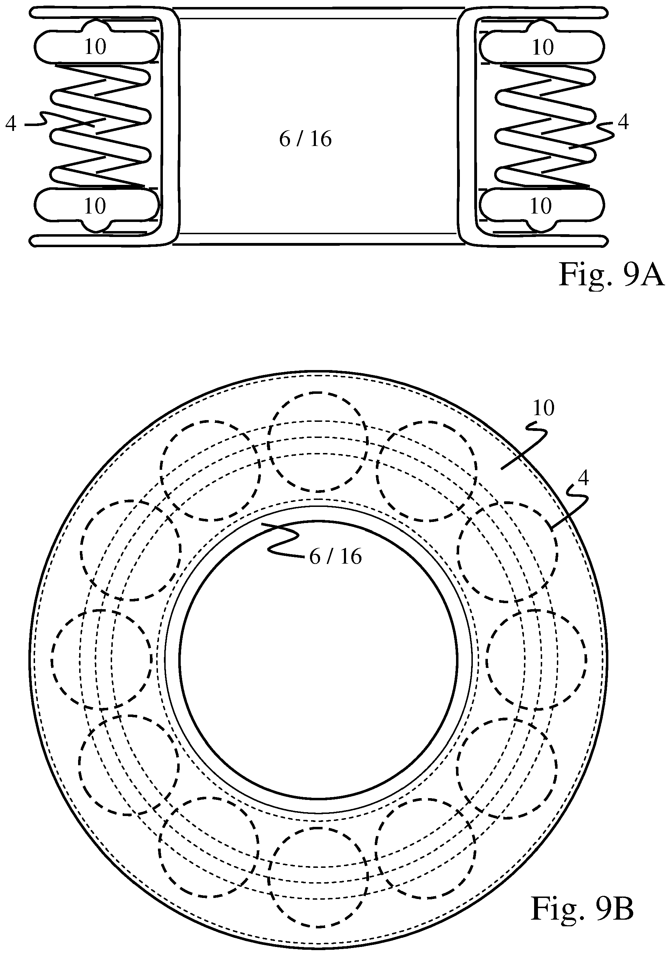

Figuren 9A und 9B zeigen eine weitere Ausführungsform der vorliegenden Erfindung. Hier werden anstelle von Tellerfedern zwölf Schraubenfedern als Federelemente 4 eingesetzt. Um eine durchgehende Dichtlinie erzeugen zu können, werden Andruck- oder Anpresselemente 10 verwendet, die von den Federelementen gegen das Dichtelement gepresst werden. Das Dichtelement ist hier beispielsweise aus PTFE hergestellt. Die Teile des PTFE-Dichtelements, die an den Dichtflächen anliegen sollen, sind relativ dünn ausgeführt, um eine gute Dichtung bereitzustellen. Der rohrförmige Teil des Dichtelements weist hingegen eine größere Wandstärke auf, da das Dichtelement in diesem Bereich ebenfalls radial wirkende Druckkräfte aufnehmen muss. Das Dichtelement 6, 16 kann in Bereich des Rohrförmigen Abschnitts als Verbundwerkstoff ausgeführt sein und beispielsweise mit einem Faserwerkstoff verstärkt sein. Anstelle der Schraubenfedern können auch alle anderen Arten von Federn wie Kegelfedern, Evolutfedern, Membranfedern und dergleichen verwendet werden, da die Dichtlinie durch die Anpresselemente erzeugt wird. Die Federelemente sind im Rahmen der vorliegenden Erfindung jedoch keine Elastomer- bzw. Gummifedern, die nur durch eine einfache Kompression des Materials bzw. durch ein Ausweichen des Materials der Feder wirken.

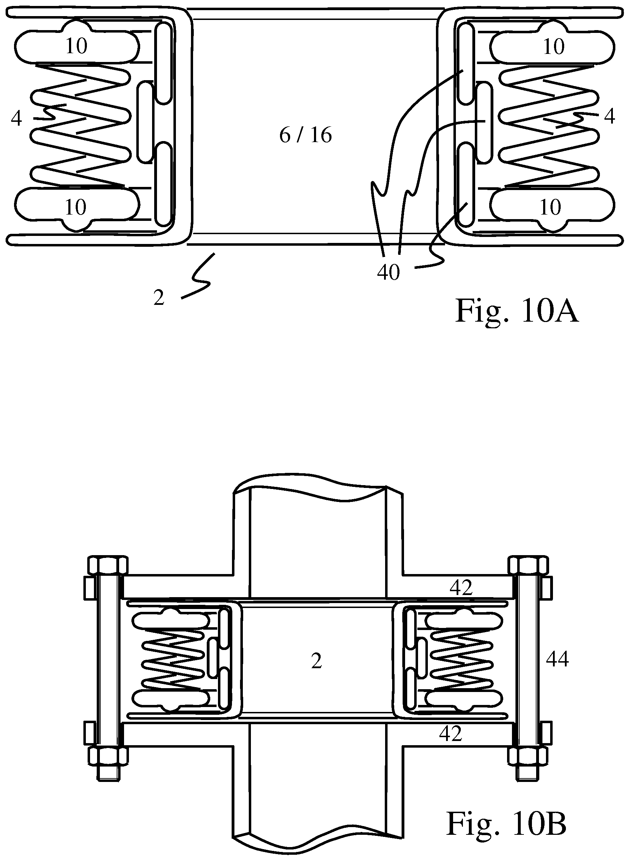

Figur 10A zeigt eine weitere Schnittansicht einer Ausführungsform ähnlich der, die in den Figuren 9A und 9B dargestellt sind, wobei die Dichtung weiter mit rohrförmigen Stützelementen versehen ist. Die rohrförmigen Stützelemente 40 stützen die Dichtung zwischen den Anpresselementen 10 in Radialrichtung nach außen ab. Die rohrförmigen Stützelemente 40 können auch direkt mit den Anpresselementen 10 verbunden sein. Die rohrförmigen Stützelemente 40 können bevorzugt teleskopartig ineinander geschoben werden, um eine Bewegung in Axialrichtung zu ermöglichen. Weiterhin kann das rohrförmige Stützelement auch ein Streckmetall oder ein Wellrohr umfassen, um ein Dichtmaterial in Radialrichtung abzustützen, und gleichzeitig eine Bewegung in Axialrichtung zu gestatten.

Figur 10B stellt die Dichtung 2 von Figur 10 dar, wie sie zwischen zwei Rohrflanschen 42 eingesetzt wird. Die Dichtung ermöglicht es den Anpressdruck zwischen den Anpresselementen und den Dichtflächen der Flansche 42 im Wesentlichen unabhängig von einem Innendruck in dem Rohr zu erreichen. Die Rohre bzw. die Flansche 42 sind über eine Verschraubung bzw. über mehrere Schraubbolzen 44 miteinander verbunden.

Die Dichtung ist unter Umständen höher als bisher verwendete Dichtungen, was sich jedoch je nach Aufbau der Dichtung und der Verrohrung ausgleichen lassen kann. Weiterhin ist die Dichtung der vorliegenden Erfindung auch für neue Anlagen vorgesehen, bei denen größere Dichtungsdicken von Vornherein berücksichtigt werden können.

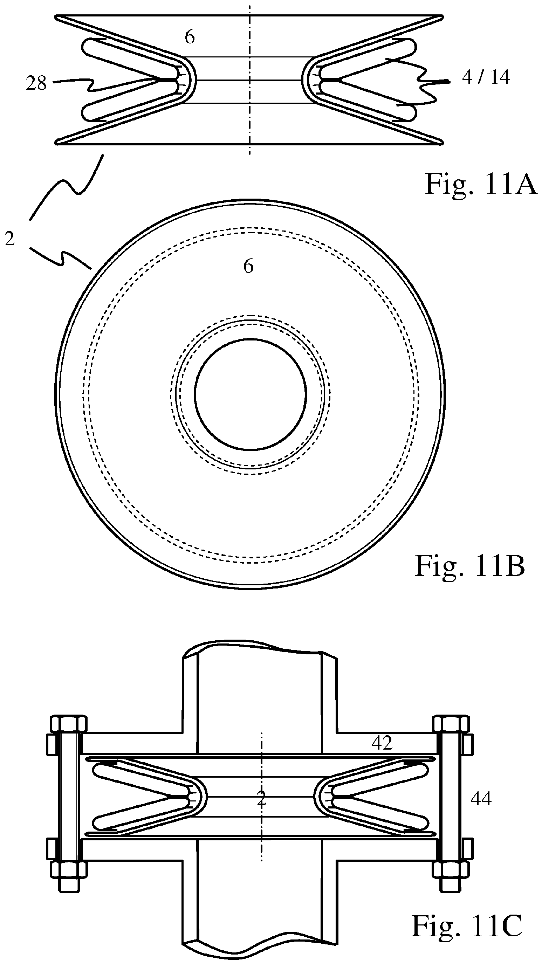

Figur 11A zeigt eine Schnittansicht einer erfindungsgemäßen Dichtung, bei der zwei Tellerfedern hintereinandergeschaltet eingesetzt werden. Die Tellerfedern sind dabei an ihren Innenrändern wie bei den Figuren 7 und 8 miteinander verbunden. In der Figur 11 sind die beiden Tellerfedern 14 durch eine Schweißnaht miteinander verbunden. Das Dichtelement 6 ist dabei als einstückiges Dichtelement 16 ausgeführt, wobei ein Teil der Oberfläche des Dichtelements ein Teil einer Torusoberfläche bildet. Bei dieser Ausführungsform sind die Tellerfedern 14 durch das Dichtelement 6 vor einem eventuell aggressiven Medium geschützt, das sich in den abzudichtenden Rohren befinden kann. Ein Verhältnis zwischen Innendurchmesser und Außendurchmesser kann dabei einem entsprechenden Verhältnis von Weichstoffdichtungen entsprechen. Ein Vorteil gegenüber der Ausführung der Figuren 2 bis 4 besteht darin, dass beide Dichtlinien den gleichen Durchmesser aufweisen und daher auch bei einer gleichen Breite eine gleichartige Dichtwirkung ermöglichen. Damit liegen an beiden Dichtflächen die gleichen Verhältnisse vor, was wiederum eine Optimierung dieses einen Typs einer Dichtlinie gestattet.

In Figur 11B ist die Dichtung in einer Aufsicht dargestellt. In Figur 11C ist dargestellt wie die Dichtung 2 in einen Dichtspalt zwischen zwei Flansche 42 eingebaut ist. Die Flansche 42 werden auch hier durch eine Verschraubung bzw. durch Schraubbolzen 44 zusammengehalten und pressen die Tellerfedern 14 so zusammen, dass an der Dichtlinie ein gewünschter Verpressungsdruck erreicht wird. Durch die Elastizität der Tellerfeder kann erreicht werden, dass sich die Verpressung des Dichtelements auch dann nicht wesentlich ändert, wenn sich das Material des Dichtelements fließt oder das Material der Flansche relaxiert bzw. sich setzt.

Der einzige Nachteil einer Dichtung nach einer der Figuren 11A bis 11C besteht darin, dass bei einem unter Druck stehenden Medium dieser Druck in einer Richtung auf die Flächen der Dichtung derart wirkt, dass dieser Druck entgegen der Verpressungsrichtung der Tellerfedern wirkt. Bei steigendem Druck wird der Verpressungsdruck verringert.

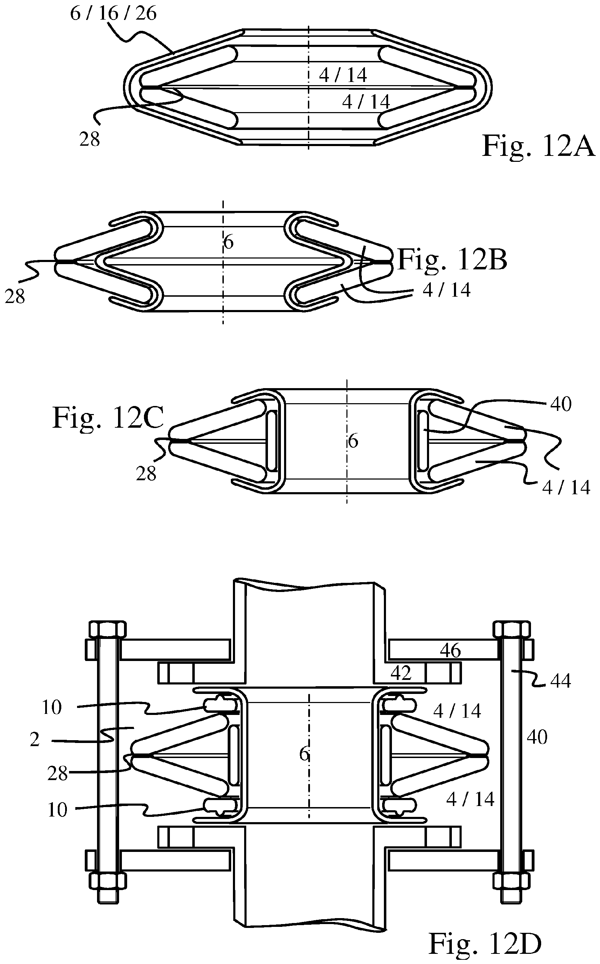

Figuren 12A bis 12D stellen Querschnitte einer anderen Art von Dichtung dar, bei der ebenfalls zwei Tellerfedern in Reihe geschaltet sind. Im Gegensatz zu der Ausführung der Figuren 11 sind die Tellerfedern hier jeweils an einem Außenrand miteinander verbunden. In Figur 12A sind die Tellerfedern 14 durch eine Schweißnaht 28 miteinander verbunden. Es ist jedoch ebenso möglich anstelle der Schweißnaht 28 die Verzahnung von Figur 7 oder einen Hohlniet wie in Figur 8 zu verwenden. In Figur 18 umgibt das Dichtelement 6, das als einstückiges Dichtelement 16 ausgeführt ist, die als Tellerfedern 14 ausgeführten Federelemente 4. Hier steht das abzudichtende Medium mit den Tellerfedern in Kontakt, weshalb die Tellerfedern insbesondere bei korrosiven Medien bevorzugt aus Edelstahl oder einem anderen medienbeständigen Material hergestellt sein sollten. Es ist ebenfalls möglich wie bei Figur 2 zwei getrennte Dichtelemente zu verwenden, da die Tellerfedern durch die Schweißnaht dichtend miteinander verbunden sind.

In Figur 12B werden die gleichen Tellerfedern wie bei 12A verwendet. Im Gegensatz zu Figur 12A verläuft das Dichtelement 6 jedoch an einer Innenseite durch die Tellerfedern 14. Der wesentliche Unterscheid besteht darin, dass die Tellerfedern nicht mehr direkt mit dem abzudichtenden Medium in Kontakt stehen, da alle Flächen die mit dem abzudichtenden Medium in Kontakt stehen durch das Material des Dichtelements gebildet werden. Diese Dichtung kann relativ einfach hergestellt werden und lässt sich ohne weiteres anstelle von herkömmlichen Weichstoffdichtungen einsetzen.

Die Ausführungen von Figur 12A und 12B zeigen Eigenschaften, die insbesondere bei höheren Drücken zu einer erhöhten Dichtheit und zu einer erhöhten Verpressung des Dichtelements führen. Die erhöhte Verpressung bei höheren Drücken wird durch die Flächen bzw. den Flächenanteil der Dichtung bzw. der Tellerfedern erzeugt, der jeweils in Axialrichtung liegt. Wenn die Dichtung mit Druck beaufschlagt wird, wirkt dieser auch auf die Flächen des Feder- bzw. Dichtelements. Da sich die Flächen von der Dichtstelle nach außen erstrecken, erhöht ein Innendruck auch den Anpressdruck des Federelements an dem Flansch bzw. der Dichtfläche.

Figur 12C zeigt eine weitere Ausführung, bei der ein rohrförmiges Stützelement 40 in der Dichtung vorgesehen ist. Das rohrförmige Stützelement verhindert, dass die Dichtung 2 eine Verpressung erzeugt, die von einem Innendruck abhängig ist.

Figur 12D stellt eine Schnittansicht durch eine Flanschdichtung dar, bei der die Dichtung in einen Flansch eingebaut ist. Die ausgewählte Dichtung ist dabei größer als es für die herkömmliche Flanschverbindung 42 vorgesehen ist. Um die größere Dichtung unterbringen zu können, wird ein Stützflansch 44 verwendet, der es ermöglicht eine Dichtung mit einem größeren Außendurchmesser als der Standardflansch der Verrohrung zu verwenden. Zusätzlich ist die Dichtung noch mit Anpresselementen 10 versehen. Die Anpresselemente 10 dienen dazu selbst bei größeren Bewegungen der beiden angrenzenden Flansche sicherzustellen, dass sich die Dichtlinie nicht in radialer Richtung bewegt, auch wenn sich die Tellerfedern elastisch verformen.

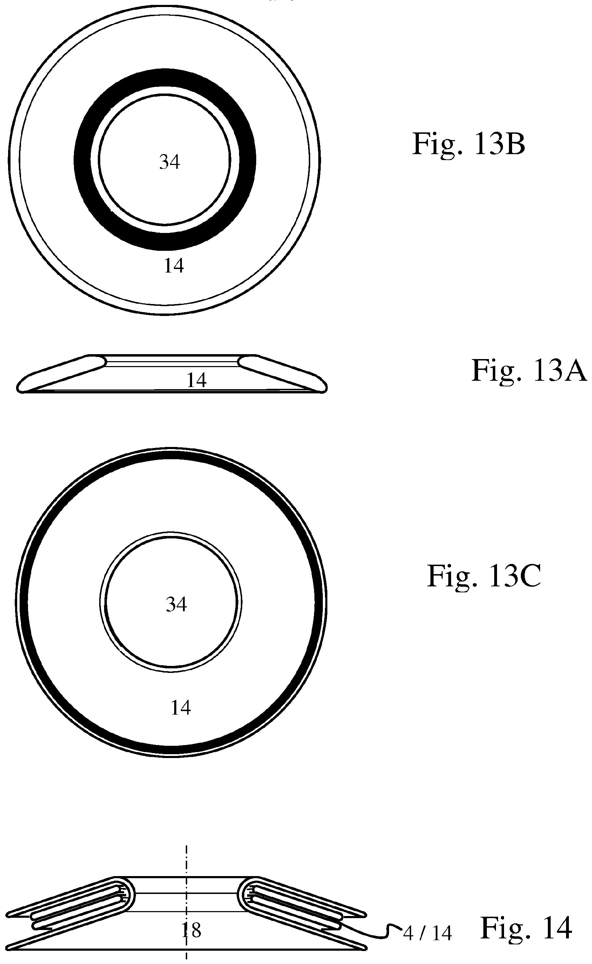

Figuren 13A bis 13C stellen verschiedene Ansichten einer Tellerfeder dar, die unterschiedlich breite Dichtlinien aufweist. Die Tellerfeder entspricht der von Figur 1 und kann in der Dichtungen der Figur 2 eingesetzt werden. Die Tellerfeder 14 weist jeweils am Innenrand und Außenrand unterschiedliche Krümmungsradien auf. Der Außenrand weist eine größere Krümmung auf als der Innenrand. Dadurch wird der Druck auf dem Innenrand auf einen größeren Radialbereich verteilt als am Außenrand. Insgesamt sollen dabei zwei Dichtlinien erzeugt werden, die jeweils eine gleiche Fläche aufweisen, wodurch sichergestellt ist, dass das Dichtungsmaterial jeweils mit einem gleichen Druck verpresst wird. Durch diese Auslegung kann jeweils an beiden Seiten ein gleiches Dichtmaterial verwendet werden, wobei sichergestellt ist, dass eine Mindestverpressung erreicht wird, und das Dichtungsmaterial an beiden Seiten nicht zu stark belastet wird und gleichzeitig ausreichend stark belastet wird, um eine Dichtigkeit sicherstellen zu können.

Figur 13A zeigt eine Schnittansicht, wobei die unterschiedlichen Krümmungsradien klar zu erkennen sind. Figur 13B zeigt eine Aufsicht auf eine breitere innere Dichtlinie. die durch die den größeren Krümmungsradius am Innenrand erzeugt wird. Figur 13C zeigt eine Aufsicht auf eine dünnere äußere Dichtlinie, die durch den kleineren Krümmungsradius am Außenrand erzeugt wird.

Figur 14 zeigt eine Ausführungsform einer Dichtung bei der zwei Tellerfedern parallel geschaltet sind. Diese Ausführung gestattet es, insbesondere durch 2, 3 oder 4 Tellerfedern, einen gewünschten Anpressdruck an einer Dichtfläche zu erzeugen. Es ist ebenfalls möglich eine Kombination von in Reihe und parallel geschalteten Tellerfedern zu verwenden, um die Vorteile der Ausführungen zu erreichen, die jeweils gleich lange Dichtlinien aufweisen.

Es wurde hier darauf verzichtet jede einzelne mögliche Kombination Parallel- und Serienschaltungen einzeln aufzuführen, diese sollen jedoch ebenfalls als offenbart angesehen werden.

Es ist sogar möglich die Tellerfeder nach Figur 1 bzw. die Dichtung ach Figur 2 dazu zu nutzen einen Übergang zwischen zwei verschiedenen Arten von Rohren abzudichten, wobei die eine Art Rohre einen höheren Verpressungsdruck bzw. ein festeres Dichtungsmaterial und die andere Art Rohre einen niedrigeren Verpressungsdruck und ein weicheres Dichtungsmaterial erfordern.

### Bezugszeichenliste

- 2: Dichtung
- 4: Federelement
- 6: Dichtelement,
- 8: Dichtfläche.
- 10: Anpresselement
- 12: Flanschdichtung
- 14: Tellerfeder
- 16: einstückiges Dichtelement
- 18: Dichtelement, direkt mit der Tellerfeder verbunden ist
- 20: Weichstoffdichtung,
- 22: Dichtraupe
- 28: Verschweißung
- 30: Verpressung
- 32: Niet
- 34: Verzahnung
- 36: Innenrand der Tellerfeder
- 38: Außenrand der Tellerfeder
- 40: Rohrförmiges Stützelement
- 42: Flansch
- 44: Verschraubung

## Patentansprüche

1. Flansch-Dichtungs-System, umfassend:
mindestens eine Statische Dichtung (2) für Flansche, umfassend:
mindestens eine Tellerfeder (4) und
mindestens ein Dichtelement (6),
wobei die mindestens eine Tellerfeder (4) dazu eingerichtet ist das mindestens eine Dichtelement (6) gegen mindestens eine Dichtfläche (8) zu pressen; und
mindestens eine statische Flanschverbindung, wobei die mindestens eine Dichtung (2) zwischen gegenüberliegenden Flanschflanken der mindestens einen statischen Flanschverbindung angeordnet ist und wobei das Flansch-Dichtungs-System **dadurch gekennzeichnet ist, dass**
die Flansche der mindestens einen statischen Flanschverbindung hergestellt sind aus einem Material, ausgewählt aus der Gruppe, bestehend aus:
Keramik, Glas, Kunststoff, einem Keramik-, Glas- oder Emaille-beschichteten Werkstoff, und einem Verbundwerkstoff, besonders bevorzugt aus Glasfaserverstärktem Kunststoff, und dadurch dass die Tellerfederkonfiguriert ist, um eine Relaxation der Flanschverbindung und ein Kriechverhalten des Dichtelements auszugleichen.

2. Flansch-Dichtungs-System gemäß Anspruch 1, weiterhin umfassend zwei Anpresselemente (10), die jeweils zwischen der mindestens einen Tellerfeder (4) und dem mindestens einen Dichtelement (6) angeordnet sind.

3. Flansch-Dichtungs-System gemäß einem der vorstehenden Ansprüche, wobei die statische Dichtung (2) als Rohr- bzw. Flanschdichtung (12) ausgeführt ist.

4. Flansch-Dichtungs-System gemäß einem der vorstehenden Ansprüche 1 bis 3, wobei das Dichtelement (6) als einstückiges Dichtelement (16) ausgeführt ist.

5. Flansch-Dichtungs-System gemäß Anspruch 4, wobei die Tellerfeder (14) ein Metall umfasst.

6. Flansch-Dichtungs-System gemäß Anspruch 4 oder 5, wobei die Tellerfeder (14) einen Kunststoff- und/oder Verbundwerkstoff umfasst.

7. Flansch-Dichtungs-System gemäß einem der vorstehenden Ansprüche, wobei das Dichtelement (6) direkt mit der Tellerfeder (4) verbunden ist.

8. Flansch-Dichtungs-System gemäß einem der vorstehenden Ansprüche, wobei das Dichtelement (6) ein Elastomer, einen Lack, einen Dichtungsweichstoff, Fasern, Kohlenstoff, Fluorpolymer, FKM, FPM und/oder PTFE und/oder gerecktes PTFE umfasst,

9. Flansch-Dichtungs-System gemäß einem der vorstehenden Ansprüche, wobei die mindestens eine Tellerfeder (4) mindestens zwei Tellerfedern (14) umfasst.

10. Flansch-Dichtungs-System gemäß Anspruch 9, wobei die mindestens zwei Tellerfedern (14) an mindestens einem Rand miteinander verbunden sind.

11. Flansch-Dichtungs-System gemäß Anspruch 10, wobei die mindestens zwei Tellerfedern (14) an einem Rand miteinander verschweißt, vernietet, verklebt oder miteinander verpresst sind.

12. Flansch-Dichtungs-System gemäß Anspruch 9 oder 10, wobei die mindestens zwei Tellerfedern (14) an mindestens einem Rand an dem sie miteinander verbunden sind jeweils eine Verzahnung aufweisen, wobei die Verzahnungen ineinandergreifen.

13. Flansch-Dichtungs-System gemäß einem der vorstehenden Ansprüche, wobei das mindestens eine Dichtelement (6), Dichtwülste, Dichtrippen oder eine andere Dichtstruktur aufweist.

14. Flansch-Dichtungs-System gemäß einem der vorstehenden Ansprüche, wobei die mindestens eine Tellerfeder (4) an einem Außenrand einen kleineren Verrundungsradius als an einem Innenrand aufweist.

15. Verwendung einer statischen Dichtung für Flansche in einem Flanschsystem gemäß Anspruch 1, wobei die Verwendung **dadurch gekennzeichnet ist, dass** das Flanschsystem eine Flanschverbindung umfasst, die hergestellt ist aus einem Material, ausgewählt aus der Gruppe, bestehend aus:
Keramik, Glas, Kunststoff, einem Keramik-, Glas- oder Emaille-beschichteten Werkstoff, und einem Verbundwerkstoff, besonders bevorzugt aus Glasfaserverstärktem Kunststoff, wobei die statische Dichtung umfasst:
mindestens eine Tellerfeder (4) und
mindestens ein Dichtelement (6),
wobei die mindestens eine Tellerfeder (4) dazu eingerichtet ist das mindestens eine Dichtelement (6) gegen mindestens eine Dichtfläche (8) zu pressen, wobei die Tellerfederkonfigurieirt ist, um eine Relaxation der Flanschverbindung und ein Kriechverhalten des Dichtelements auszugleichen.

## Claims

1. Flange-sealing-system comprising:
at least one static sealing (2) for flanges comprising:
at least one disc spring (4), and
at least one sealing element (6),
wherein the at least one disc spring (4) is adapted to press the at least one sealing element (6) against at least one sealing surface (8); and
at least one static flanged joint, wherein the at least one sealing (2) is disposed between opposed flange flanks of the at least one static flanged joint, and wherein the flange-sealing-system is **characterized in that**
the flanges of the at least one static flanged joint are made of a material selected from the group consisting of:
ceramic, glass, plastic, a ceramic-, glass- or enamel coated material, and a composite material, particularly preferred of glass fiber reinforced plastic, and thereby the disc spring is configured to compensate for a relaxation of the flanged joint and a creep behavior of the sealing element.

2. A flange-sealing-system according to claim 1, further comprising two pressing elements (10) each disposed between the at least one disc spring (4) and the at least one sealing element (6).

3. A flange-sealing-system according to one of the preceding claims, wherein the static sealing (2) is designed as a pipe or flange seal (12).

4. A flange-sealing-system according to one of the preceding claims 1 to 3, wherein the sealing element (6) is designed as a one-piece sealing element (16).

5. A flange-sealing-system according to claim 4, wherein the disc spring (14) comprises a metal.

6. A flange-sealing-system according to claim 4 or 5, wherein the disc spring (14) comprises a plastic and/or composite material.

7. A flange-sealing-system according to any of the preceding claims, wherein the sealing element (6) is directly joined to the disc spring (4).

8. A flange-sealing-system according to any of the preceding claims, wherein the sealing element (6) comprises an elastomer, a lacquer, a sealing soft material, fibers, carbon, fluoropolymer, FKM, FPM and/or PTFE and/or stretched PTFE.

9. A flange-sealing-system according to any of the preceding claims, wherein the at least one disc spring (4) comprises at least two disc springs (14).

10. A flange-sealing-system according to claim 9, wherein the at least two disc springs (14) are joined together at at least one edge.

11. A flange-sealing-system according to claim 10, wherein the at least two disc springs (14) are welded, riveted, glued or pressed together at one edge.

12. A flange-sealing-system according to claim 9 or 10, wherein the at least two disc springs (14) each have a toothing at at least one edge at which they are joined together, wherein the toothings engage.

13. A flange-sealing-system according to any of the preceding claims, wherein the at least one sealing element (6) has sealing beads, sealing ribs or another sealing structure.

14. A flange-sealing-system according to any of the preceding claims, wherein the at least one disc spring (4) has a smaller radius of curvature at an outer edge than at an inner edge.

15. Use of a static sealing for flanges in a flange system according to claim 1, wherein the use is **characterized in that**, that the flange system comprises a flange joint made of a material selected from the group consisting of:
ceramic, glass, plastic, a ceramic-, glass- or enamel- coated material, and a composite material, particularly preferred of glass fiber reinforced plastic, wherein the static sealing comprises:
at least one disc spring (4), and
at least one sealing element (6),
wherein the at least one disc spring (4) is adapted to press the at least one sealing element (6) against at least one sealing surface (8), wherein the disc spring is configured to compensate for a relaxation of the flanged joint and a creep behavior of the sealing element.

## Revendications

1. Système d'étanchéité de brides, comprenant :
au moins une garniture d'étanchéité statique (2) pour brides, comprenant :
au moins une rondelle Belleville (4) et
au moins un élément d'étanchéité (6),
dans lequel l'au moins une rondelle Belleville (4) est conçue pour presser l'au moins un élément d'étanchéité (6) contre au moins une surface d'étanchéité (8) ; et
au moins un raccord à brides statique, l'au moins une garniture d'étanchéité (2) étant disposée entre des flancs de bride opposés de l'au moins un raccord à brides statique, et le système d'étanchéité de bride étant **caractérisé en ce que**
les brides de l'au moins un raccord à brides statique sont fabriqués en un matériau sélectionné parmi le groupe comprenant :
la céramique, le verre, le plastique, un matériau revêtu de verre ou d'émail, et un matériau composite, de façon particulièrement préférentielle un plastique renforcé par de fibres de verre, et **en ce que** la rondelle Belleville est configurée pour pallier au relâchement du raccord à brides et au fluage de l'élément d'étanchéité.

2. Système d'étanchéité de brides selon la revendication 1, comprenant en outre deux éléments de pression (10) respectivement disposés entre l'au moins une rondelle Belleville (4) et l'au moins un élément d'étanchéité (6) .

3. Système d'étanchéité de brides selon l'une des revendications précédentes, dans lequel la garniture d'étanchéité statique (2) est conçue comme une garniture d'étanchéité de bride ou de tuyau (12).

4. Système d'étanchéité de brides selon l'une des revendications 1 à 3, dans lequel l'élément d'étanchéité (6) est conçu comme un élément d'étanchéité monobloc (16).

5. Système d'étanchéité de brides selon la revendication 4, dans lequel le rondelle Belleville (14) comporte un métal.

6. Système d'étanchéité de brides selon la revendication 4 ou 5, dans lequel le rondelle Belleville (14) comporte un matériau composite et/ou une matière plastique.

7. Système d'étanchéité de brides selon l'une des revendications précédentes, dans lequel l'élément d'étanchéité (6) est relié directement au rondelle Belleville (4).

8. Système d'étanchéité de brides selon l'une des revendications précédentes, dans lequel l'élément d'étanchéité (6) comporte un élastomère, une peinture, un matériau d'étanchéité mou, des fibres, du carbone, un fluoropolymère, du FPM et/ou du PTFE et/ou du PTFE expansé.

9. Système d'étanchéité de brides selon l'une des revendications précédentes, dans lequel l'au moins une rondelle Belleville (4) comporte au moins deux rondelles Belleville (14).

10. Système d'étanchéité de brides selon la revendication 9, dans lequel les au moins deux rondelles Belleville (14) sont reliées entre elles sur au moins un bord.

11. Système d'étanchéité de brides selon la revendication 10, dans lequel les au moins deux rondelles Belleville sont soudées, rivetées, collées ou pressées les unes aux autres sur un bord.

12. Système d'étanchéité de brides selon la revendication 9 ou 10, dans lequel les au moins deux rondelles Belleville (14) présentent respectivement une denture sur au moins un bord au niveau duquel elles sont reliées entre elles, les dentures étant imbriquées les unes aux autres.

13. Système d'étanchéité de brides selon l'une des revendications précédentes, dans lequel l'au moins un élément d'étanchéité (6) présente des boudins d'étanchéité, des nervures d'étanchéité ou une autre structure d'étanchéité.

14. Système d'étanchéité de brides selon l'une des revendications précédentes, dans lequel l'au moins un rondelle Belleville (4) présente un rayon de courbure plus petit sur un bord extérieur que sur un bord intérieur.

15. Utilisation d'une garniture d'étanchéité statique pour brodes dans un système de brides selon la revendication 1, dans laquelle
l'utilisation est **caractérisé en ce que** le système de brides comporte un raccord à brides constituée d'un matériau sélectionné parmi le groupe comprenant :
la céramique, le verre, le plastique, un matériau revêtu de verre ou d'émail, et un matériau composite, de façon particulièrement préférentielle un plastique renforcé par de fibres de verre, dans laquelle la garniture d'étanchéité statique comprend :
au moins une rondelle Belleville (4) et
au moins un élément d'étanchéité (6),
dans laquelle l'au moins une rondelle Belleville (4) est conçue pour presser l'au moins un élément d'étanchéité (6) contre au moins une surface d'étanchéité (8), la rondelle Belleville étant configurée pour pallier au relâchement du raccord à brides et au fluage de l'élément d'étanchéité.
